# EUROPEAN PATENT APPLICATION

(11) **EP 1 278 149 A1**
(43) Date of publication of application: **22.01.2003**
(21) Application number: 02254803.6
(22) Date of filing: 09.07.2002
(51) Int. Cl.: G06F 17/60

(54) **Content item management**

(30) Priority: 20.07.2001 GB 0117703
(71) Applicant: Hewlett-Packard Company, Palo Alto, California 94304-1185 (US)
(72) Inventor: Oliver, Huw Edward, Eastville, Bristol BS5 6DR (GB); Squibbs, Robert Francis, Easter Compton, Bristol BS35 5RJ (GB); McDonnell, James Thomas Edward, Malmesbury SN16 9NZ (GB); Brown, Sean, Chiswick, London W4 PU (GB)
(74) Representative: Squibbs, Robert Francis

(57) **Abstract**

In order to facilitate the management of content items (11) intended to be hosted by one or more content server systems (17), each item (11) has associated behaviour data (12) that specifies a desired commercial behaviour of that item as a function of at least one variable. The commercial behaviour specified by the behaviour data (12) concerns, for example, placement, promotion or pricing of the content item. When a commercial decision is required concerning an item, its relevant behaviour data (12), together with a current value of the said at least one variable (27) concerned, is used to make the decision. By giving the content items their own autonomous behaviour, the content provider is freed from being continually asked to make decisions regarding commercialisation of the items.

## Description

### Field of the Invention

The present invention relates to a method of managing content items intended to be hosted by one or more content server systems; the invention further relates to a content server system for implementing such method.

As used herein, the term "content item" is intended to cover any body of data that can be downloaded over a communications network; example content items include, without limitation, web pages, music files, streaming media, text documents, etc.

### Background of the Invention

For certain high-value content items such as streaming video, significant human effort is put into how best to make available, promote and price the content items taking account of time varying factors, all this being done to maximise potentially very considerable earnings. However, such detailed management of content items can only be justified economically for items likely to produce high returns and even then the responsiveness to sudden changes in the commercial environment is often inadequate leading to missed opportunities.

It is simply uneconomic to put similar amounts of effort into controlling the commercialisation of low value items such as individual web pages and, as a result, these items are usually subject to standard commercialisation programs covering large categories of items involving fixed deals with selected content distributors or content hosts (server systems). There is very little flexibility built into the arrangements and no possibility of adapting how an item is handled to take account of on-going market conditions.

It is an object of the present invention to facilitate the management of content items.

### Summary of the Invention

According to one aspect of the present invention, there is provided a method of managing content items intended to be hosted by one or more content server systems for access by remote users, the method comprising the steps of:
(a) associating respective behaviour data with each content item, the behaviour data associated with each content item specifying a desired commercial behaviour of that item as a function of at least one variable;
(b) treating each content item in combination with its associated behaviour data as an autonomous entity and passing it to a content-item handling system; and
(c) at the content-item handling system, using the behaviour data associated with a content item, together with a current value of said at least one variable, to determine said commercial behaviour of that item.

The commercial behaviour specified by the behaviour data associated with a content item concerns, for example, placement, promotion or pricing of the content item. Step (a) is preferably effected by content providers whereas step (c) can be effected by the content server systems or an intermediate party such as a content distributor.

By giving the content items their own autonomous behaviour, the content provider is freed from being continually asked to make decisions regarding commercialisation of the items.

According to another aspect of the present invention, there is provided a content server system comprising:
- a receiving subsystem for receiving autonomous content entities each comprising a content item and associated behaviour data specifying for the content item a desired commercial behaviour of that item as a function of at least one variable;
- a storage subsystem for storing received content items and their associated behaviour data;
- a content server for providing stored content items to remote users in response to requests received at the server system; and
- a processing subsystem for effecting a determination of a commercial behaviour of a said content item on the basis of the behaviour data associated with the content item and the current value of said at least one variable.

### Brief Description of the Drawings

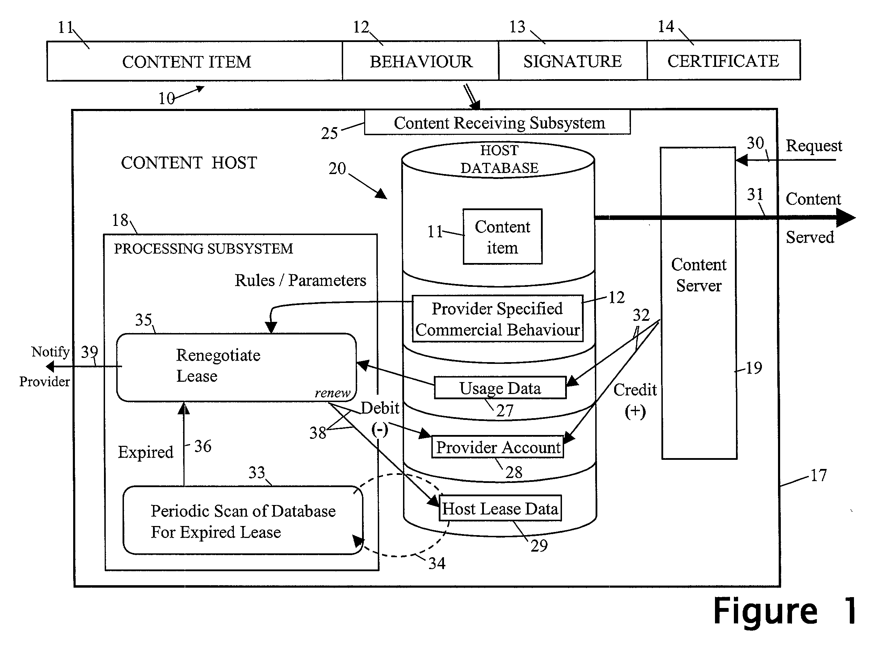

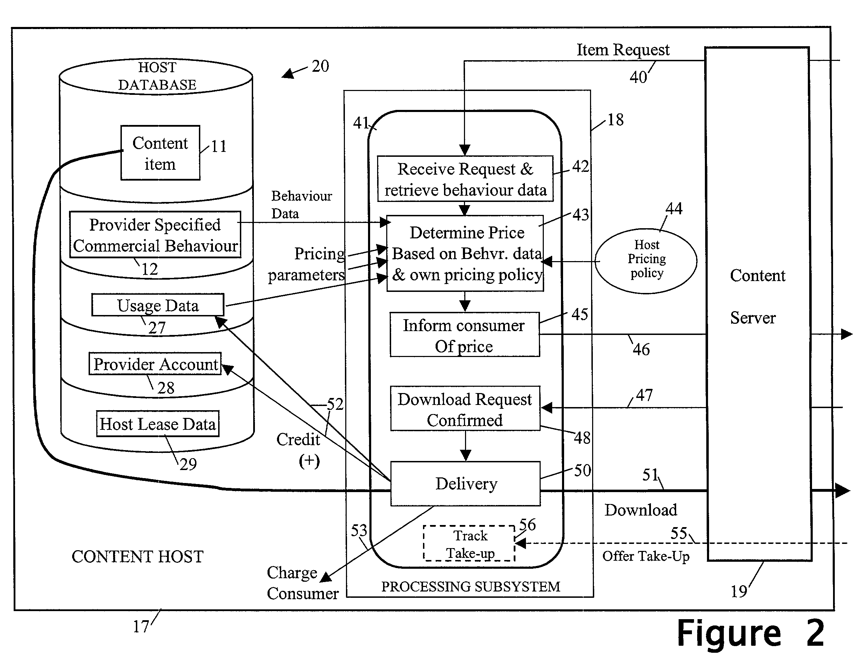

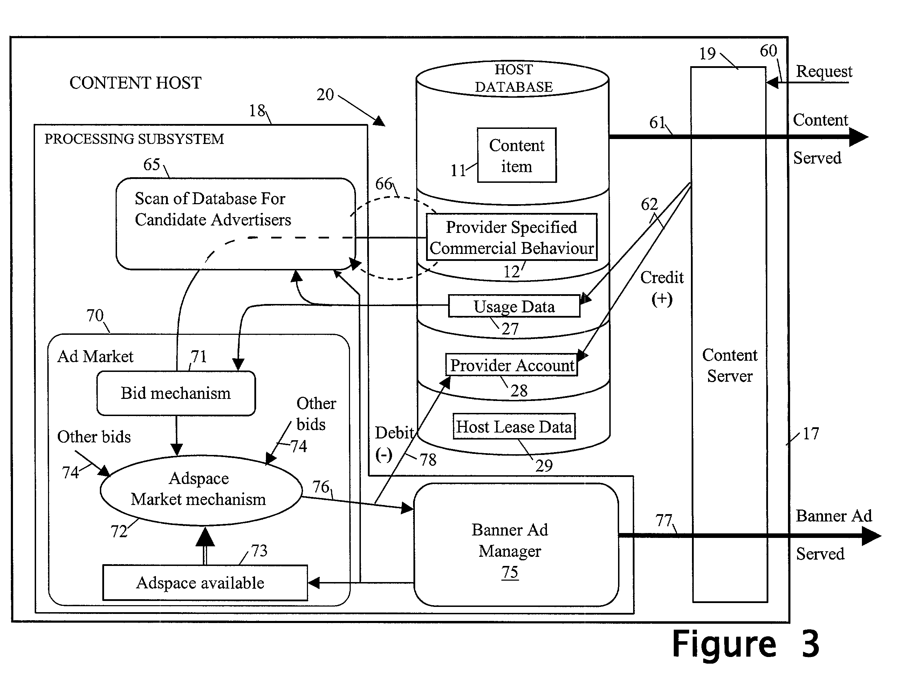

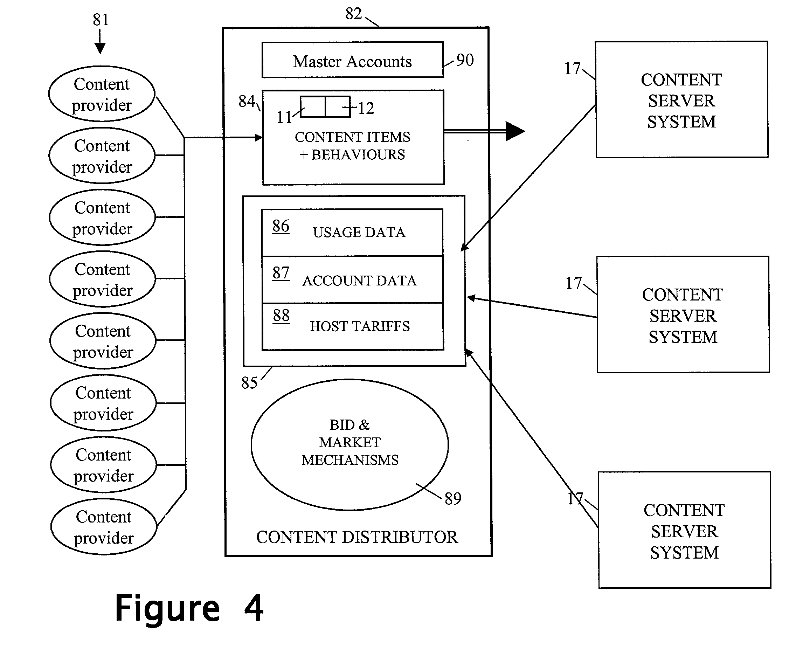

Embodiments of the invention will now be described, by way of non-limiting example, with reference to the accompanying diagrammatic drawings, in which:
- **. Figure 1**: is a diagram of a content server system for hosting content items with associated behaviour data relating to determining whether hosting is to continue when a current hosting period expires;
- **. Figure 2**: is a diagram of a content server system for hosting content items with associated behaviour data relating to determining pricing of the content items;
- **. Figure 3**: is a diagram of a content server system for hosting content items with associated behaviour data relating to determining whether to pay for promotional advertisements; and
- **. Figure 4**: is a diagram showing a content distribution system for distributing content provided by multiple content providers to multiple content server systems.

### Best Mode of Carrying Out the Invention

Figure 1 shows a first embodiment of the invention in which a content server system 17 is arranged to host content items 11 that 'lease' space on the server system for a charge, each access to the content item from a remote user resulting in a credit being recorded for the content item. In this first embodiment, each content item has associated commercial behaviour data 12 for determining whether or not the item is to renew its 'lease' of hosting space on the server system 17 upon the expiry of a current space leasing period.

The server system 17 comprises a content server 19 (for example, a web server) for serving content items to remote users in response to requests received from these users, a database 20 for holding content items and related data, and a processing subsystem 18 typically constituted by a program-controlled processor.

The database 20 is organised to hold a number of different types of data, in particular:
- content items 11;
- respective commercial behaviour data 12 for each content item;
- usage data regarding the use (number of remote accesses) of each content item and, preferably, also a time-dependent history of such use;
- account data 28 for each content item or for each group of items from the same content provider, this account data taking account of credit for accesses by remote users and charges made by the server system for hosting and/or promotion of the content items; preferably a historical track of credit is also kept;
- host lease data 29 which is data maintained for the benefit of the server system operator regarding the current leasing of space on the server system to the content items, this data including details of when the current hosting space lease expires for each content item and also the space leasing tariffs charged.

Content items are received at a receiving subsystem 25 of the server system 17 in files 10 (typically sent over a computer network) either direct from content providers or via intermediaries such as a content distributor. In the present example, each file 10 comprise the content item 11 itself, commercial behaviour data 12, a digital signature 13 made by the content provider using a private key of a public-key/private-key pair and encompassing both the content item and behaviour data 12, and a certificate 14 originating from a certificate authority including the public key of the content provider. Having the content provider digitally sign the content item and behaviour data not only ensures that these elements are received in untampered form by the service system but also enables the sever system to prove that the behaviour data originated from the content provider should there be any dispute over this later on.

The behaviour data 12 specifies a commercial behaviour for the associated content item 11as a function of one or more variables - in the case of the Figure 1 embodiment, the commercial behaviour specified is whether or not to renew a hosting space lease on server system 17 taking account of both of the usage of the item during a current lease period and the future lease tariffs offered by the server system 17. For present purposes, it is assumed that the initial lease of hosting space for the content has been previously agreed by an appropriate mechanism prior to sending the content item to the server system 17; it would also be possible for content-item files to be sent speculatively to the server system with behaviour data for determining whether or not to take up any hosting space that is available for leasing.

The behaviour data can take the form of one or more rules set out in the behaviour data and which lead to a determination of the commercial behaviour concerned when supplied with current values of the variables associated with the rules (in this example, item usage and lease tariffs). Alternatively, the behaviour data can take the form of a reference to a rule or set of rules maintained either by the server system 17 or by an external party, the rule or set of rules being then retrieved as required. The external party may be the content provider or a third party.

After the server system receives a content-item file 10 in respect of a content item it has agreed to host, the server system 17 extracts the content item and associated behaviour data and places them in the database 20. Once the agreed initial lease period has commenced, the content server 19 makes the content item available to remote users such that a request for the item received by the content server (see arrow 30) results in the server 19 retrieving the item from the database 20 and sending it to the requestor (see arrow 31). At the same time, usage data 27 for the content item is updated as is the corresponding account data 28 (see arrows 32).

In due course, the initial lease period for the content item under consideration expires, this being detected by a periodic scan (dashed arrow 34) of the lease data 29 carried out by a process 33 running on the processing subsystem 18. Detection of the expired lease results in the process 33 triggering (arrow 36) a lease renegotiation process 35, also run by processing subsystem 18. Process 35 accesses the behaviour data 12 associated the content item concerned to obtain (either directly or after retrieval from a referenced resource) the rule or set of rules to be used for the lease renegotiation. The details of the rules applied are outside the scope of the present invention and will therefore not be discussed at length; however, by way of example, the rule(s) can set maximum tariffs that a content item will accept on the basis of the usage made of the content item during the just-expired lease period. Rather than looking at usage, credit (account data) can be used, particularly if a variable pricing mechanism is being employed, such as the one to be described below with reference to Figure 2.

If process 35 determines that the lease is to be renewed, the provider account 28 is debited an appropriate amount and the lease data 29 is updated, setting a new lease expiry date. Regardless of whether or not the lease is renewed, process 35 is also responsible for sending a notification (arrow 39) to the content provider or their agent as to the accumulated credit for the content item and of the outcome of the lease renegotiation.

The Figure 2 embodiment is similar to that of Figure 1 but now the behaviour data associated with a content item governs the pricing of that item. More particularly, Figure 2 shows a server system 17 with content server 19, database 20 and processing subsystem 18 of the same general form as the Figure 1 system. The processing subsystem 18 is arranged to run a pricing process 41 each time a request (arrow 40) is received for a content item 11.

Process 41 involves the following steps:
- Upon receipt of a request for a content item, the behaviour data governing pricing for the item is retrieved from database 20 (step 42). This behaviour specifies pricing rules and will generally include certain parameters such as an initially price and a price fall-off rate value indicating how pricing is to fall with time. The pricing governed by the behaviour data is the pricing to the operator of the server system (that is, how much the content provider is to be credited for each use of the content item concerned) rather than the price of the item to the end user - this latter price is by a pricing policy 44 of the system operator which can even specify that the item is free to the end user, regardless of the credit to be allocated to the content provider for each use.
- Next, the end-user price for the item is determined (step 43) by first determining the price to be paid by the operator and then applying the operator's pricing policy (for example, a 50% mark-up on the provider's price). The provider's price is determined using the pricing behaviour data and the current value of the relevant variables. In a simple example, the behaviour data specifies that the provider's price should fall off at a predetermined rate from an initial price and in this case, the variable whose current value is to be used is the time elapsed since a start time and date, such as the time and date of first posting of the content item on the content server system or the creation time and date of the item concerned. Other example pricing policies are given below.
- After the end-user (customer) price has been determined, this price is passed to the user (see step 45 and arrow 46).
- The user then decides whether or not to access the item concerned at the indicated price and if a positive decision is made (arrow 47), the download confirmation is received at step 48.
- At step 50, the content item is retrieved from database 20 and delivered to the user (arrow 51). At the same time, the usage and account data for the content item is updated (arrow 52) and a charge is made to the user (typically by debiting the user's account with the system operator) ― see arrow 53.

In this manner, the price of the content item is dynamically changed according to one or more variables specified in the behaviour data. In the above example, the price is determined each time the item is requested; however, it will be appreciated that pricing adjustment could be arranged to take place at different intervals, such as once every day.

As regards the variables to be used in determining the price of an item, many possibilities exist in addition to the above example of elapsed time. For example, pricing can be based on:
- aggregate use with price falling off as the number of accesses increases;
- access rate with price falling off as the rate of accesses declines;
- aggregate credit with price falling off as specified credit levels are reached;
- credit increase rate with pricing falling off as the rate of increase declines;
- position in time of day, week, month or year cycle;
- time remaining until a deadline associated with the item (the price may be set either to rise or fall as the deadline approaches)
- take-up of an offer or other opportunity offered by the content item, the price falling or increasing as the take-up of the offer or opportunity increases / approaches a limit (for this purpose, the take-up of the offer or opportunity by a user is tracked by a process step 56 ― see dashed box ― in response to take up messages 55 received from users).
An example of using elapsed time from creation as the pricing variable is where a video sequence of a goal being scored in a soccer match is posted immediately after the goal is scored, the price of the video sequence being high for the first few hours and then gradually decreasing to a base value. An example of pricing varying according to take-up is where a limited number of places exist to meet a celebrity, the pricing of places being increased as the number of remaining places decreases.

Figure 3 depicts an embodiment similar to Figures 1 and 2 except that now the commercial behaviour governed by the behaviour data associated with the content items is the placing of advertisements (generally for the content item itself, though this need not be the case). More particularly, Figure 3 shows a server system 17 with content server 19, database 20 and processing subsystem 18 of the same general form as the Figure 1 system. The processing subsystem 18 is arranged to run an advertising market place 70 in which content items can participate through their associated behaviour data. In the present example, the server system has banner ad space which is managed by banner ad manager 75 run by the processing subsystem 18. Banner ad manager 75 periodically auctions available ad space by passing an indication of the available space and minimum advertising rates to a component 73 of the market place process 70; at the same time, a process 65 is triggered to ascertain which content items wish to participate in bidding for the available advertising space.

Process 65 scans through the behaviour data of the content items and determines, according to that data whether the content item wishes to participate. Thus, for example, the behaviour data of an item may specify that if the content item has not been accessed for a certain period of time then it is to participate but only provided that its current credit is above a predetermined minimum; a different content item may, on the other hand, specify that it is always to participate in the ad market.

For each item identified as a participant in the ad market, a corresponding bid mechanism sub-process 71 is created for making bids according to rules identified by the behaviour data of the item. A market mechanism process 72 runs the market for advertising space, taking bids (see arrow 74) from the bid mechanisms 71 as it auctions off the available ad space starting at the specified minimum values. Whenever an ad space is allocated to a bidding content item, the banner ad manager is informed (arrow 76) and the account of the content item is appropriately debited (arrow 78); a banner ad for the item concerned is subsequently generated and output to users (arrow 77).

Of course, it is also possible simply to make advertising space available at fixed rates on a first-come first-served basis in which case the behaviour data only concerns determining whether a content item is to use the available advertising space.

A market place similar to that described above for advertising space can also be used in the Figure 1 embodiment for hosting space.

Figure 4 depicts the role of a content distributor 82 in distributing content items 11 from multiple content providers 81to multiple content server systems 17. In the present example, each content provider associates a required commercial behaviour with each of their content items and passes them to the content distributor 82 where the content items 11 and behaviour data 12 are stored in store 84.

In this embodiment, the commercial behaviour of an item is determined at the content distributor according to the associate behaviour data and data periodically received from the content server systems. For each server system, this latter data includes, for example, usage data 86 for the content item concerned, account data 87 for the item, and hosting and advertising tariffs 88, this data being stored in store 85 of the content distributor.

The content distributor runs a marketplace 89 for hosting and advertising space on the server systems 17 and the content items bid for hosting and advertising space based on their respective behaviour data and the usage and account data (or the current values of any other variables specified in their behaviour data). A content item successfully bidding for space of a server system is then passed to that system and its master account 90 at the content distributor is debited accordingly; usage credits for use of an item at a server system are subsequently passed back to the content distributor for incorporation into the master account 90 for the content item. Where a bid is successfully made by a content item for advertising space, the details required for the advertising are passed to the server system concerned and the item master account 90 debited.

In this way, the behaviour data need not be passed to the server systems and the latter need not concern themselves with determining the commercial behaviours of the hosted content.

Furthermore, it is possible to arrange for the content distributor to make commercial determinations for a content item that not only treat each server system in isolation, but also determinations that effectively make comparisons between systems and decide which system(s) a content item will use.

Where pricing decisions are to be made frequently, such as at each usage, it is preferable to enable the server systems to make the required pricing determinations for a content item rather than having the content distributor make such determinations.

It will be appreciated that the behaviour data associated with a content item will, in practice, be formatted according to a standard intended to be used by all participant content providers, distributors and content servers systems. As it is possible to associated a variety of commercial behaviours with a content item (for example, a behaviour for pricing, for bidding for advertising space, for extending hosting lease, etc.), each type of behaviour is preferable identified by an agreed standard code.

### Variants

It will be appreciated that many variants are possible to the above described embodiments of the invention.

In the foregoing examples, it has been assumed that behaviour data has been associated by the content provider with their content items (for example, by selecting a behaviour from a predefined set of behaviours generally accepted by the server systems that the content provider would like to use). However, it would also be possible for a third party to undertake the task of associating appropriate behaviour data with a content item, this potentially being attractive as assessing the behaviour best suited to an item is likely to a commercial skill not possessed by every content provider. It is further possible to automate the process by having software analyse general content and therefore likely user interest and then choose an appropriate behaviour.

The behaviour data can be associated with the corresponding content item by any suitable means not limited to inclusion in the same file as in the example embodiments described above. Thus, for example, the behaviour data can be embedded into the content item as a watermark of appropriate form or as a bar code. The content item and its associated behaviour data together form an autonomous content entity in the sense that this entity can be passed around between systems and defines its own behaviour, that is, the behaviour of its own content item in relation to the aspect of the content-item behaviour affected by the behaviour data.

## Claims

1. A method of managing content items (11) intended to be hosted by one or more content server systems (17) for access by remote users, the method comprising the steps of:
(a) associating respective behaviour data (12) with each content item (12), the behaviour data associated with each content item specifying a desired commercial behaviour of that item as a function of at least one variable;
(b) treating each content item (11) in combination with its associated behaviour data (12) as an autonomous entity (10) and passing it to a content-item handling system (17;82); and
(c) at the content-item handling system (17;82), using the behaviour data (12) associated with a content item (11), together with a current value of said at least one variable, to determine said commercial behaviour of that item.

2. A method according to claim 1, wherein step (a) is effected for a content item (11) by the provider (81) of that item.

3. A method according to claim 1 or claim 2, wherein the content-handling system is a said content server system (17) and said commercial behaviour concerns that system.

4. A method according to claim 1 or claim 2, wherein the content-handling system is a content-item distributor system (82) responsible for distributing content items (11) to said one or more content server systems (17), step (c) concerning commercial behaviour of a said content item (11) in respect of a specific content server system (17).

5. A method according to claim 1 or claim 2, wherein the content-handling system is a content-item distributor system (82) responsible for distributing content items (11) to said one or more content server systems (17), step (c) concerning commercial behaviour of a said content item (11) in respect making a choice between content server systems (17).

6. A method according to claim 1, wherein said behaviour data (12) comprises at least one rule for determining an associated commercial behaviour.

7. A method according to claim 1, wherein said behaviour data (12) comprises a reference to at least one rule for determining an associated commercial behaviour; said at least one rule being held locally by the content-item handling system (17;82).

8. A method according to claim 1, wherein said behaviour data (12) comprises a reference to at least one rule for determining an associated commercial behaviour; said at least one rule being held remotely from the content-item handling system (17;82) and step (b) involving retrieving said at least one rule.

9. A method according to claim 1, wherein said at least one variable comprises at least one of the following:
- cumulative usage of the content item (11);
- usage history of the content item (11);
- aggregate credit for the content item taking account of credit for accesses by remote users and costs related to hosting and/or promotion of the item (11);
- credit history for the content item taking account of credit for accesses by remote users and costs related to hosting and/or promotion of the item (11);
- elapsed hosting time;
- position in time of day, week, month or year cycle;
- take up of offer or opportunity made in the content item (11);
- nearness to a deadline associated with the content item (11).

10. A method according to claim 1, wherein the commercial behaviour specified by the behaviour data (12) associated with a content item (11) concerns setting a price for the item.

11. A method according to claim 10, wherein the content-handling system is a said content server system (17) and step (c) is carried out in respect of a content item (11) each time a request is made for that item to the content server system (17) hosting the item.

12. A method according to claim 10, wherein the behaviour data (12) associated with a said content item (11) specifies pricing as a function of elapsed time from a predetermined time origin.

13. A method according to claim 10, wherein the behaviour data (12) associated with a said content item (11) specifies pricing as a function of take-up of an offer or opportunity set out in the content item.

14. A method according to claim 10, wherein the behaviour data (12) associated with a said content item (11) specifies pricing as a function of time remaining until a deadline associated with the content item.

15. A method according to claim 1, wherein the commercial behaviour specified by the behaviour data (12) associated with a content item (11) concerns determining whether the content item is to be hosted, or remain hosted, on a particular said content server system (17).

16. A method according to claim 15, wherein the content-handling system is a said content server system (17) and step (c) is carried out at that system with said variable being at least one of hosting cost charged by the content server system and, where the item (11) has previously been hosted on the content server system, the number of accesses made to the content item on that system.

17. A method according to claim 15, wherein the content server system (17) operates a market for its hosting space and the behaviour data (12) of said content item (11) indicates how bids are to be placed into the market for space for the content item.

18. A method according to claim 1, wherein the commercial behaviour specified by the behaviour data (12) associated with a content item (11) concerns determining which of multiple content host systems (17) are to host the content item, said content-item handling system being a content distributor system (82) and step (c) being effected by that system with said variable being at least one of hosting cost for each candidate content server system (17) and number of accesses made to that system.

19. A method according to claim 18, wherein the content distributor system (82) operates a market for hosting space on said content server systems (17), and the behaviour data (12) of said content item (11) indicates how bids are to be placed into the market for space for the content item.

20. A method according to claim 1, wherein the commercial behaviour specified by the behaviour data (12) associated with a content item (11) concerns the publishing of promotion advertisements for the item on a content server system (17) on which the content item is hosted.

21. A method according to claim 20, wherein said content-item handling system is a said content server system (17) and step (c) is carried out at that system with said variable being at least one of access history for the content item (11) and advertising cost charged by the content server system.

22. A method according to claim 21, wherein the content server system (17) operates a market for its advertising space and the behaviour data (12) of said content item (11) indicates how bids are to be placed into the market for advertising space for the content item.

23. A method according to claim 1, wherein the commercial behaviour specified by the behaviour data (12) associated with a content item (11) concerns determining which of multiple content server systems (17), if any, are to be used for advertisements for the content item, the content-item handling system being a content distribution system (82) and step (c) being effected by that system with said variable being at least one of advertising cost for each candidate content server system (17) and number of accesses made to that system.

24. A method according to claim 23, wherein the content distributor system (82) operates a market for advertising space on said content server systems (17), and the behaviour data (12) of said content item (11) indicates how bids are to be placed into the market for advertising space for the content item.

25. A content server system (17) comprising:
- a receiving subsystem (25) for receiving autonomous content entities (10) each comprising a content item (11) and associated behaviour data (12) specifying for the content item a desired commercial behaviour of that item as a function of at least one variable;
- a storage subsystem (20) for storing received content items and their associated behaviour data;
- a content server (19) for providing stored content items (11) to remote users in response to requests received at the server system; and
- a processing subsystem (18) for effecting a determination of a commercial behaviour of a said content item (11) on the basis of the behaviour data (12) associated with the content item and the current value of said at least one variable.

26. A system according to claim 25, wherein said behaviour data (12) comprises at least one rule for determining an associated commercial behaviour.

27. A system according to claim 25, wherein said behaviour data (12) comprises a reference to at least one rule for determining an associated commercial behaviour; said at least one rule being held locally in said storage subsystem.

28. A system according to claim 25, wherein said behaviour data (12) comprises a reference to at least one rule for determining an associated commercial behaviour; said at least one rule being held remotely to the content server system and the processing subsystem being operative to retrieving said at least one rule.

29. A system according to claim 25, wherein said at least one variable comprises at least one of the following:
- cumulative usage of the content item;
- usage history of the content item;
- aggregate credit for the content item taking account of credit for accesses by remote users and costs related to hosting and/or promotion of the item;
- credit history for the content item taking account of credit for accesses by remote users and costs related to hosting and/or promotion of the item;
- elapsed hosting time;
- position in time of day, week, month or year cycle;
- take up of offer or opportunity made in the content item;
- nearness to a deadline associated with the content item.

30. A system according to claim 25, wherein the commercial behaviour specified by the behaviour data (12) associated with a content item (11) concerns setting a price for the item.

31. A system according to claim 30, wherein the processor subsystem (18) is operative to set a price for said content item (11) each time a request is made for that item to a content server system (17).

32. A system according to claim 30, wherein the behaviour data (12) associated with a said content item (11) specifies pricing of that item as a function of elapsed time from a predetermined time origin, the processing subsystem (18) including means for determining said elapsed time.

33. A system according to claim 30, wherein the behaviour data (12) associated with a said content item (11) specifies pricing of that item as a function of take-up of an offer or opportunity set out in the content item, the content server (19) including means for tracking take up of said offer or opportunity.

34. A system according to claim 30, wherein the behaviour data (12) associated with a said content item (11) specifies pricing of that item as a function of time remaining until a deadline associated with the content item, the processing subsystem (18) including means for determining said remaining time

35. A system according to claim 25, wherein the commercial behaviour specified by the behaviour data (12) associated with a content item (11) concerns determining whether the content item is to be hosted, or remain hosted, on the content server system (17).

36. A system according to claim 35, wherein the said at least one variable of the function specified by the behaviour data (12) is at least one of hosting cost charged by the content server system (17) and, where the item has previously been hosted on the content server system, the number of accesses made to the content item on that system.

37. A system according to claim 35, wherein the processing subsystem (18) includes means providing a market for the hosting space of the system, and means for making bids into the market on behalf of a said content item in dependence on the associated behaviour data.

38. A system according to claim 25, wherein the commercial behaviour specified by the behaviour data (12) associated with a content item (11) concerns the publishing of promotion advertisements for that item on the content server system (17).

39. A system according to claim 38, wherein the said at least one variable of the function specified by the behaviour data (12) is at least one of access history for the content item (11) and advertising cost charged by the content server system (17).

40. A system according to claim 38, wherein the processing subsystem (18) includes means providing a market for the hosting space of the system, and means for making bids into the market on behalf of a said content item (11) in dependence on the associated behaviour data (17).
